(19) Europäisches Patentamt
European Patent Office
Office européen des brevets

(11) **EP 3 007 443 B1**

(12) **EUROPEAN PATENT SPECIFICATION**

(45) Date of publication and mention
of the grant of the patent:
**18.12.2019 Bulletin 2019/51**

(51) Int Cl.:
*H04N 19/117* (2014.01)     *H04N 19/82* (2014.01)
*H04N 19/172* (2014.01)     *H04N 19/14* (2014.01)
*H04N 19/182* (2014.01)     *H04N 19/17* (2014.01)
*H04N 19/176* (2014.01)     *H04N 19/86* (2014.01)

(21) Application number: **14808170.6**

(22) Date of filing: **05.06.2014**

(86) International application number:
**PCT/JP2014/065009**

(87) International publication number:
**WO 2014/196613 (11.12.2014 Gazette 2014/50)**

(54) **LOOP ADAPTIVE FILTERING IN VIDEO CODING**

ADAPTIVE SCHLEIFENFILTERUNG FÜR VIDEOCODIERUNG

FILTRAGE ADAPTATIF À BOUCLE EN CODAGE VIDÉO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2013 JP 2013120890**

(43) Date of publication of application:
**13.04.2016 Bulletin 2016/15**

(73) Proprietor: **KDDI Corporation**
**Tokyo 160-0023 (JP)**

(72) Inventors:
• **YOSHINO, Tomonobu**
**Fujimino-shi**
**Saitama 356-8502 (JP)**
• **NAITO, Sei**
**Fujimino-shi**
**Saitama 356-8502 (JP)**

(74) Representative: **Pitchford, James Edward et al**
**Mathys & Squire LLP**
**The Shard**
**32 London Bridge Street**
**London SE1 9SG (GB)**

(56) References cited:
**EP-A1- 2 445 216       WO-A1-2009/110559**
**WO-A1-2010/146771    WO-A1-2011/102074**
**WO-A1-2011/125867    JP-A- H0 816 793**
**JP-A- 2012 161 063      US-A1- 2008 152 247**

• **TOMONOBU YOSHINO ET AL: "Adaptive loop filter technology based on analytical design considering local image characteristics", IMAGE PROCESSING (ICIP), 2011 18TH IEEE INTERNATIONAL CONFERENCE ON, IEEE, 11 September 2011 (2011-09-11), pages 3477-3480, XP032080444, DOI: 10.1109/ICIP.2011.6116462 ISBN: 978-1-4577-1304-0**
• **XINGQI YUAN ET AL: "A New Algorithm of Image Filtering Based on Matlab", ENGINEERING AND TECHNOLOGY (S-CET), 2012 SPRING CONGRESS ON, IEEE, 27 May 2012 (2012-05-27), pages 1-4, XP032472919, DOI: 10.1109/SCET.2012.6341974 ISBN: 978-1-4577-1965-3**
• **KAWAMURA K ET AL: "Adaptive loop filtering using directional activity", 96. MPEG MEETING; 21-3-2011 - 25-3-2011; GENEVA; (MOTION PICTURE EXPERT GROUP OR ISO/IEC JTC1/SC29/WG11),, no. m19708, 18 March 2011 (2011-03-18), XP030048275,**
• **MATSUMURA M ET AL: "CE8.h: CU-based ALF with non-local means filter", 7. JCT-VC MEETING; 98. MPEG MEETING; 21-11-2011 - 30-11-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-G235, 8 November 2011 (2011-11-08), XP030110219,**

- **KARCZEWICZ (QUALCOMM) M ET AL: "Video coding technology proposal by Qualcomm", 1. JCT-VC MEETING; 15-4-2010 - 23-4-2010; DRESDEN; (JOINTCOLLABORATIVE TEAM ON VIDEO CODING OF ISO/IEC JTC1/SC29/WG11 AND ITU-TSG.16 ); URL: HTTP://WFTP3.ITU.INT/AV-ARCH/JCTVC-SITE/,, no. JCTVC-A121, 18 May 2010 (2010-05-18), XP030007567, ISSN: 0000-0049**

- **LIST P ET AL: "Adaptive deblocking filter", IEEE TRANSACTIONS ON CIRCUITS AND SYSTEMS FOR VIDEO TECHNOLOGY, INSTITUTE OF ELECTRICAL AND ELECTRONICS ENGINEERS, USA, vol. 13, no. 7, 1 July 2003 (2003-07-01), pages 614-619, XP011221094, ISSN: 1051-8215, DOI: 10.1109/TCSVT.2003.815175**

## EP 3 007 443 B1

**Description**

TECHNICAL FIELD

The present invention relates to a video coding device, a video decoding device, a video system, a video coding method, a video decoding method, and a program.

BACKGROUND ART

Non-patent References 1-4 describe techniques for enhancing image quality in video compression coding by filtering coded images.

In particular, Non-patent References 1 and 2 describe video compression coding standards. These standards enable the application of filtering for reducing quality degradation that occurs at block boundaries due to compression coding.

On the other hand, Non-patent References 3 and 4 describe techniques for adaptively updating the filter that restores coding degradation on a frame-by-frame basis.

In particular, Non-patent Reference 3 describes calculating one type of filter for the entire screen, such that the square error with the original image is minimized for the entire screen. On the other hand, Non-patent Reference 4 describes designing a plurality of filters on a frame-by-frame basis, in consideration of the locality of optimal filter design.

PRIOR ART DOCUMENTS

NON-PATENT REFERENCE

Non-patent Reference 1: Joint Video Team (JVT) of ISO/IEC MPEG and ITU-T VCEG, "Text of ISO/IEC 14496-10 Advanced Video Coding", July 2004.
Non-patent Reference 2: "High Efficiency Video Coding (HEVC) text specification draft 10", JCT-VC 12th meeting, JCTVC-L1003 v34, Jan. 2013.
Non-patent Reference 3: T. Chujoh, G. Yasuda, N. Wada and T. Yamagake, "Block-based adaptive loop filter", ITU-T Q.6/SG16, VCEG-AI18, 2008.
Non-patent Reference 4: M. Karczewicz, P. Chen, R. Joshi, X. Wang, W. Chien, R. Panchal, "Video coding technology proposal by Qualcomm Inc.", JCTVC-A121, April 2010.
Non-patent Reference 5: T. Yoshino, S. Naito, "Adaptive loop filter technology based on analytical design considering local image characteristics", 18th IEEE International Conference on Image Processing, 2011, pages 3477-3480, which discloses adaptive loop filter technology, based on the Wiener algorithm, applied to minimize coding distortion over a frame.
Non-patent Reference 6: P. List et al., "Adaptive deblocking filter", IEEE Transactions on Circuits and Systems for Video Technology, vol. 13, no. 7, July 2003, which describes an adaptive deblocking filter which performs operations to detect and analyze artifacts on coded block boundaries and attenuates those by applying a selected filter.

DISCLOSURE OF INVENTION

PROBLEMS THAT THE INVENTION IS TO SOLVE

The filtering in Non-patent Reference 1 and Non-patent Reference 2 can only be applied to quality degradation that occurs at block boundaries. The enhancement in image quality due to filtering is thus limited.

On the other hand, the filtering in Non-patent Reference 3 can be adaptively applied to the entire screen. However, with the filtering in Non-patent Reference 3, only one type of filter can be calculated for the entire screen as mentioned above.

Here, when the entire screen includes edges and flat areas partitioned by the edges, the pixels constituting the flat areas will be greater in number than the pixels constituting the edges when the screen is viewed as a whole. With one type of filter for the entire screen that is calculated in Non-patent Reference 3, the flat areas will thus be dominant compared with the edges. Accordingly, it tends to noticeable when edges lose their sharpness, and despite the edges being important patterns, with the filtering in Non-patent Reference 3, there are cases where the edge component cannot be maintained, preventing sufficient enhancement in image quality from being obtained through filtering.

Also, with the filtering in Non-patent Reference 4, a plurality of filters are designed on a frame-by-frame basis

3

in consideration of the locality of optimal filter design, as mentioned above. Specifically, first, a feature amount based on the pixel value gradient is calculated for every predetermined small area for the pixel values of a decoded image, and the small areas are sorted by threshold processing that uses a predetermined threshold. Next, an optimal filter is designed for each set of the sorted pixels. This enables a filter for edges and a filter for flat areas to be designed separately.

However, the feature amount based on the pixel value gradient is dependent on the pattern of the image. With the threshold processing that uses the predetermined threshold mentioned above, there are thus cases where the sorting of small areas cannot be implemented optimally in filter design, thus preventing sufficient enhancement in image quality from being obtained through filtering.

The present invention is made in view of the above-mentioned problems, and has an object to improve coding performance by enhancing image quality through filtering.

MEANS OF SOLVING THE PROBLEMS

The present invention is a video coding device as defined in Claim 1 of the appended claims. Also provided is a video decoding device as defined in Claim 5, video systems as defined in Claims 9 and 10, a video coding method as defined in Claim 11, a video decoding method as defined in Claim 12, and programs as defined in Claims 13 and 14.

The present invention proposes the following items in order to solve the above problems.

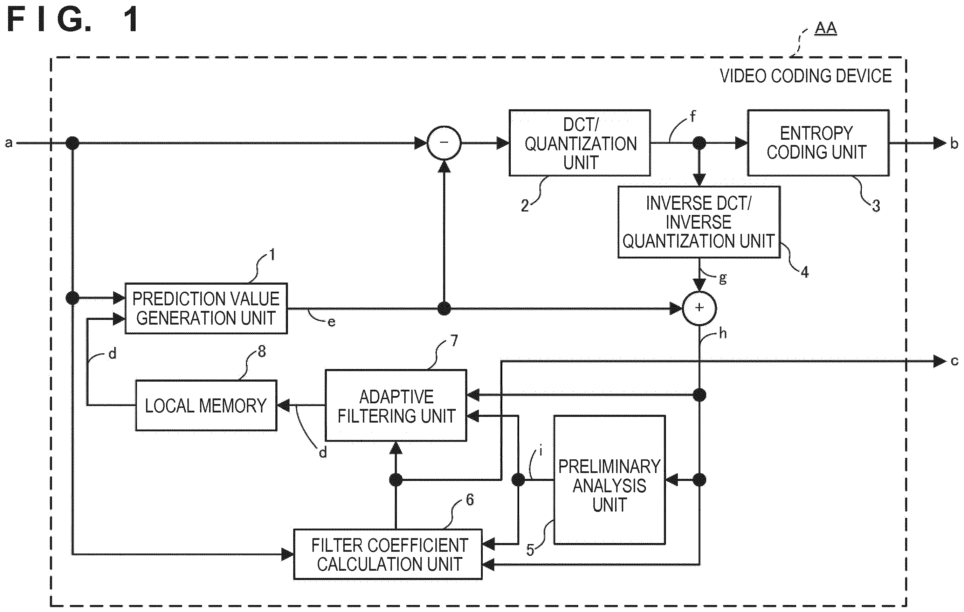

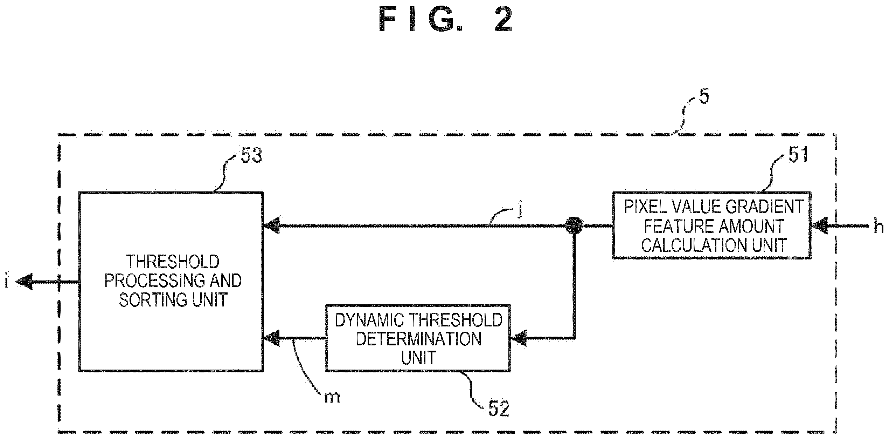

(1) The present invention proposes a video coding device (e.g., equivalent to video coding device AA in Fig. 1) that allows adaptive filtering within a coding loop and allows filter design in units of a pixel or in units of a small area that is constituted by a plurality of pixels, including pixel value feature amount calculation means (e.g., equivalent to pixel value gradient feature amount calculation unit 51 in Fig. 2) for deriving a feature amount (e.g., equivalent to below-mentioned pixel value gradient) of pixel values of a decoded image (e.g., equivalent to pre-filtering local decoded image h in Fig. 1) in the pixel units or the small area units, threshold processing and sorting means (e.g., equivalent to threshold processing and sorting unit 53 in Fig. 2) for comparing the feature amounts derived by the pixel value feature amount calculation means with a threshold, and sorting the respective pixels or the respective small areas based on a result of the comparison, and dynamic threshold determination means (e.g., equivalent to dynamic threshold determination unit 52 in Fig. 2) for determining the threshold based on the feature amounts derived by the pixel value feature amount calculation means.

According to this invention, the threshold that is used when sorting pixels or small areas is determined based on a feature amount derived in pixel units or small area units. The threshold can thus be determined dynamically in consideration of the pattern of the image, enabling the sorting of pixels or small areas to be optimally implemented in filter design. Accordingly, coding performance can be improved by enhancing the image quality obtained through filtering.

(2) The present invention proposes a video coding device according to which, in the video coding device of (1), the dynamic threshold determination means determines the threshold based on a distribution (e.g., equivalent to below-mentioned histogram) of the feature amounts derived by the pixel value feature amount calculation means.

According to this invention, in the video coding device of (1), the threshold can be determined based on the distribution of the feature amounts.

(3) The present invention proposes a video coding device according to which, in the video coding device of (1) or (2), the dynamic threshold determination means includes characteristic bin detection means for deriving a histogram of the feature amounts derived by the pixel value feature amount calculation means, and detecting bins in which frequencies are concentrated from among the bins of the derived histogram, and threshold determination means for deriving the frequencies of two bins that are adjacent to each other among the bins detected by the characteristic bin detection means, and determining a value between the two derived frequencies as the threshold for the two bins.

According to this invention, in the video coding device of (1) or (2), a histogram of feature amounts is derived, bins in which frequencies are concentrated are detected from among the bins of the derived histogram, and a value between the frequencies of two bins that are adjacent to each other among the detected bins is determined as the threshold for these two bins. The threshold can thus be determined using a histogram of the feature amounts.

(4) The present invention proposes a video coding device according to which, in the video coding device of (3), the characteristic bin detection means detects bins in which the frequencies are concentrated, using first-order differentiation (e.g., equivalent to below-mentioned first-order differentiation evaluation value $D_1(k)$) and second-order differentiation (e.g., equivalent to below-mentioned second-order differentiation evaluation value $D_2(k)$) with respect to the frequencies of bins that are adjacent to each other among the bins of the histogram.

According to this invention, in the video coding device of (3), bins in which frequencies are concentrated are detected using first-order differentiation and second-order differentiation with respect to the frequencies of bins that are adjacent to each other. Changes in the frequencies of bins that are adjacent to each other can thus be detected by first-order differentiation and second-order differentiation with respect to the frequencies, enabling bins in which frequencies are concentrated to be appropriately detected.

(5) The present invention proposes a video coding device according to which, in the video coding device of (3) or (4), the characteristic bin detection means determines an average value of the frequencies of two bins that are adjacent to each other among the bins detected by the characteristic bin detection means or a weighted average value of the frequencies of two bins that are adjacent to each other among the bins detected by the characteristic bin detection means as the threshold for the two bins.

According to this invention, in the video coding device of (3) or (4), the average value of the frequencies of two adjacent bins in which frequencies are concentrated or the weighted average value of the frequencies of two adjacent bins in which frequencies are concentrated is determined as the threshold for these two bins. The pixels or small areas respectively belonging to these two bins can thus be appropriately sorted using the threshold, enabling effects similar to the above-mentioned effects to be achieved.

(6) The present invention proposes a video coding device according to which, in the video coding device of any one of (1) to (5), the pixel value feature amount calculation means derives a pixel value gradient as the feature amount.

According to this invention, in the video coding device of any one of (1) to (5), the threshold can be determined dynamically using the pixel value gradient as the feature amount.

(7) The present invention proposes a video coding device according to which, in the video coding device of (6), the pixel value feature amount calculation means derives the pixel value gradient using a Sobel filter or a Laplacian filter.

According to this invention, in the video coding device of (6), the pixel value gradient can be derived using a Sobel filter or a Laplacian filter.

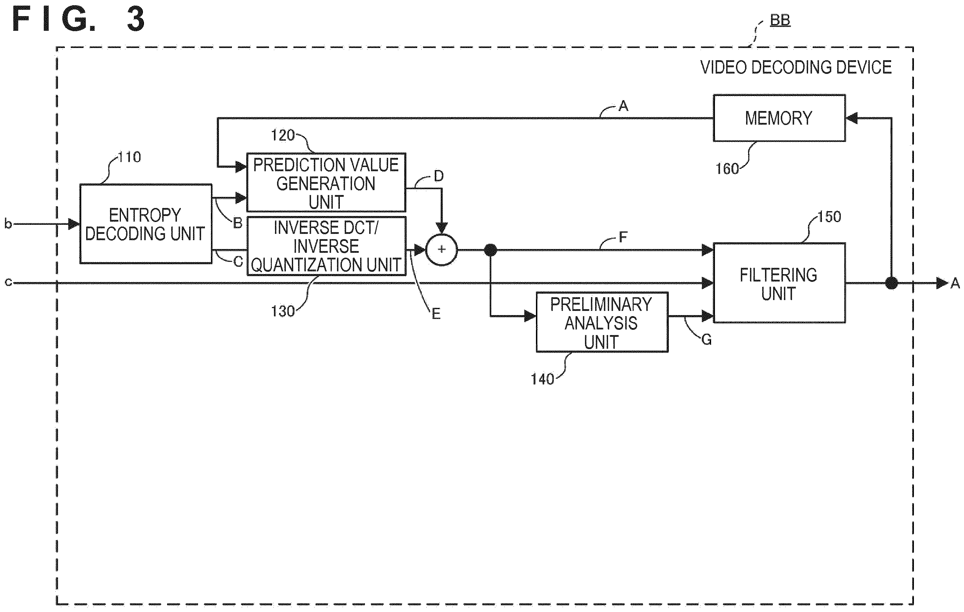

(8) The present invention proposes a video decoding device (e.g., equivalent to video decoding device BB in Fig. 3) that allows adaptive filtering within a decoding loop and allows filter application in units of a pixel or in units of a small area that is constituted by a plurality of pixels, including pixel value feature amount calculation means for deriving a feature amount (e.g., equivalent to below-mentioned pixel value gradient) of pixel values of a decoded image (e.g., equivalent to pre-filtering decoded image F in Fig. 3) in the pixel units or the small area units, threshold processing and sorting means for comparing the feature amounts derived by the pixel value feature amount calculation means with a threshold, and sorting the respective pixels or the respective small areas based on a result of the comparison, and dynamic threshold determination means for determining the threshold based on the feature amounts derived by the pixel value feature amount calculation means.

According to this invention, the threshold that is used when sorting pixels or small areas is determined based on a feature amount derived in pixel units or small area units. The threshold can thus be determined dynamically in consideration of the pattern of the image, enabling the sorting of pixels or small areas to be optimally implemented in filter design. Accordingly, coding performance can be improved by enhancing the image quality obtained through filtering.

(9) The present invention proposes a video decoding device according to which, in the video decoding device of (8), the dynamic threshold determination means determines the threshold based on a distribution (e.g., equivalent to below-mentioned histogram) of the feature amounts derived by the pixel value feature amount calculation means.

According to this invention, in the video decoding device of (8), the threshold can be determined based on the distribution of the feature amounts.

(10) The present invention proposes a video decoding device according to which, in the video decoding device of (8) or (9), the dynamic threshold determination means includes characteristic bin detection means for deriving a histogram of the feature amounts derived by the pixel value feature amount calculation means, and detecting bins in which frequencies are concentrated from among the bins of the derived histogram, and threshold determination means for deriving the frequencies of two bins that are adjacent to each other among the bins detected by the characteristic bin detection means, and determining a value between the two derived frequencies as the threshold for the two bins.

According to this invention, in the video decoding device of (8) or (9), a histogram of the feature amounts is derived, bins in which frequencies are concentrated are detected from among the bins of the derived histogram, and a value between the frequencies of two bins that are adjacent to each other among the detected bins is determined as the threshold for these two bins. The threshold can thus be determined using a histogram of the feature amounts.

(11) The present invention proposes a video decoding device according to which, in the video decoding device of (10), the characteristic bin detection means detects bins in which the frequencies are concentrated, using first-order differentiation (e.g., equivalent to below-mentioned first-order differentiation evaluation value $D_1(k)$) and second-order differentiation (e.g., equivalent to below-mentioned second-order differentiation evaluation value $D_2(k)$) with respect to the frequencies of bins that are adjacent to each other among the bins of the histogram.

According to this invention, in the video decoding device of (10), bins in which frequencies are concentrated are detected using first-order differentiation and second-order differentiation with respect to the frequencies of bins that are adjacent to each other. Changes in the frequencies of bins that are adjacent to each other can thus be detected by first-order differentiation and second-order differentiation with respect to the frequencies, enabling bins in which frequencies are concentrated to be appropriately detected.

(12) The present invention proposes a video decoding device according to which, in the video decoding device of (10) or (11), the characteristic bin detection means determines an average value of the frequencies of two bins that are adjacent to each other among the bins detected by the characteristic bin detection means or a weighted average value of the frequencies of two bins that are adjacent to each other among the bins detected by the characteristic bin detection means as the threshold for the two bins.

According to this invention, in the video decoding device of (10) or (11), the average value of the frequencies of two adjacent bins in which frequencies are concentrated or the weighted average value of the frequencies of two adjacent bins in which frequencies are concentrated is determined as the threshold for these two bins. The pixels or small areas respectively belonging to these two bins can thus be appropriately sorted using the threshold, enabling effects similar to the above-mentioned effects to be achieved.

(13) The present invention proposes a video decoding device according to which, in the video decoding device of any one of (8) to (12), the pixel value feature amount calculation means derives a pixel value gradient as the feature amount.

According to this invention, in the video decoding device of any one of (8) to (12), the threshold can be determined dynamically using the pixel value gradient as the feature amount.

(14) The present invention proposes a video decoding device according to which, in the video decoding device of any one of (8) to (12), the pixel value feature amount calculation means derives a dispersion value of pixel values as the feature amount.

According to this invention, in the video decoding device of any one of (8) to (12), the threshold can be determined dynamically using the dispersion value of pixel values as the feature amount.

(15) The present invention proposes a video decoding device according to which, in the video decoding device of (13), the pixel value feature amount calculation means derives the pixel value gradient using a Sobel filter or a Laplacian filter.

According to this invention, in the video decoding device of (13), the pixel value gradient can be derived using a Sobel filter or a Laplacian filter.

(16) The present invention proposes a video system including a video coding device (e.g., equivalent to video coding device AA in Fig. 1) that allows adaptive filtering within a coding loop and allows filter design in units of a pixel or in units of a small area that is constituted by a plurality of pixels, and a video decoding device (e.g., equivalent to video decoding device BB in Fig. 3) that allows adaptive filtering within a decoding loop and allows filter application in the pixel units or the small area units, the video coding device including coding-side pixel value feature amount calculation means (e.g., equivalent to pixel value gradient feature amount calculation unit 51 in Fig. 2) for deriving a feature amount (e.g., equivalent to below-mentioned pixel value gradient) of pixel values of a decoded image (e.g., equivalent to pre-filtering local decoded image h in Fig. 1) in the pixel units or the small area units, coding-side threshold processing and sorting means (e.g., equivalent to threshold processing and sorting unit 53 in Fig. 2) for comparing the feature amounts derived by the coding-side pixel value feature amount calculation means with a threshold, and sorting the respective pixels or the respective small areas based on a result of the comparison, and coding-side dynamic threshold determination means (e.g., equivalent to dynamic threshold determination unit 52 in Fig. 2) for determining the threshold based on the feature amounts derived by the coding-side pixel value feature amount calculation means, and the video decoding device including decoding-side pixel value feature amount calculation means for deriving a feature amount (e.g., equivalent to below-mentioned pixel value gradient) of pixel values of a decoded image (e.g., equivalent to pre-filtering decoded image F in Fig. 3) in the pixel units or the small area units, decoding-side threshold processing and sorting means for comparing the feature amounts derived by the decoding-side pixel value feature amount calculation means with a threshold, and sorting the respective pixels or the respective small areas based on a result of the comparison, and decoding-side dynamic threshold determination means for determining the threshold based on the feature amounts derived by the decoding-side pixel value feature amount calculation means.

According to this invention, in both the video coding device and the video decoding device, the threshold that is used when sorting pixels or small areas is determined based on a feature amount derived in pixel units or small area units. The threshold can thus be determined dynamically in consideration of the pattern of the image, enabling the sorting of pixels or small areas to be optimally implemented in filter design. Accordingly, coding performance can be improved by enhancing the image quality obtained through filtering.

Also, according to this invention, in both the video coding device and the video decoding device, the threshold that is used when sorting pixels or small areas is determined based on a feature amount derived in pixel units or small area units, and the pixels or the small areas are sorted using the determined threshold. Since the threshold determined by the video coding device or the result of sorting the pixels or the small areas in the video coding device does not need to be transmitted to the video decoding device, coding performance can be further improved as compared with the case where the threshold or the sorting result is transmitted to the video decoding device from the video coding device.

(17) The present invention proposes a video system including a video coding device (e.g., equivalent to video coding device AA in Fig. 1) that allows adaptive filtering within a coding loop and allows filter design in units of a pixel or in units of a small area that is constituted by a plurality of pixels, and a video decoding device (e.g., equivalent to video decoding device BB in Fig. 3) that allows adaptive filtering within a decoding loop and allows filter application in the pixel units or the small area units, the video coding device including coding-side pixel value feature amount calculation means (e.g., equivalent to pixel value gradient feature amount calculation unit 51 in Fig. 2) for deriving a feature amount (e.g., equivalent to below-mentioned pixel value gradient) of pixel values of a decoded image (e.g., equivalent to pre-filtering local decoded image h in Fig. 1) in the pixel units or the small area units, coding-side threshold processing and sorting means (e.g., equivalent to threshold processing and sorting unit 53 in Fig. 2) for comparing the feature amounts derived by the coding-side pixel value feature amount calculation means with a threshold, and sorting the respective pixels or the respective small areas based on a result of the comparison, coding-side dynamic threshold determination means (e.g., equivalent to dynamic threshold determination unit 52 in Fig. 2) for determining the threshold based on the feature amounts derived by the coding-side pixel value feature amount calculation means, and transmission means for transmitting a result of the sorting by the coding-side threshold processing and sorting means or the threshold determined by the coding-side dynamic threshold determination means to the video decoding device, and the video decoding device including reception means for receiving the sorting result or the threshold transmitted from the transmission means.

According to this invention, in the video coding device, the threshold that is used when sorting pixels or small areas is determined based on a feature amount derived in pixel units or small area units, and the pixels or the small areas are sorted using the determined threshold. The threshold can thus be determined dynamically in consideration of the pattern of the image, enabling the sorting of pixels or small areas to be optimally implemented in filter design. Accordingly, coding performance can be improved by enhancing the image quality obtained through filtering.

Also, according to this invention, in the video coding device, the threshold that is used when sorting pixels or small areas is determined based on a feature amount derived in pixel units or small area units, the pixels or the small areas are sorted using the determined threshold, and the sorting result or the threshold is transmitted to the video decoding device. Since the video decoding device does not need to derive a threshold or sort the pixels or the small areas using a threshold, the computational load on the video decoding device can be reduced as compared with the case where thresholds are derived or sorting is performed in both the video coding device and the video decoding device.

(18) The present invention proposes a video coding method of a video coding device (e.g., equivalent to video coding device AA in Fig. 1) that includes pixel value feature amount calculation means (e.g., equivalent to pixel value gradient feature amount calculation unit 51 in Fig. 2), threshold processing and sorting means (e.g., equivalent to threshold processing and sorting unit 53 in Fig. 2) and dynamic threshold determination means (e.g., equivalent to dynamic threshold determination unit 52 in Fig. 2) and that allows adaptive filtering within a coding loop and allows filter design in units of a pixel or in units of a small area that is constituted by a plurality of pixels, the method including a first step of the pixel value feature amount calculation means deriving a feature amount (e.g., equivalent to below-mentioned pixel value gradient) of pixel values of a decoded image (e.g., equivalent to pre-filtering local decoded image h in Fig. 1) in the pixel units or the small area units, a second step of the threshold processing and sorting means comparing the feature amounts derived by the pixel value feature amount calculation means with a threshold, and sorting the respective pixels or the respective small areas based on a result of the comparison, and a third step of the dynamic threshold determination means determining the threshold based on the feature amounts derived by the pixel value feature amount calculation means.

According to this invention, the threshold that is used when sorting pixels or small areas is determined based on a feature amount derived in pixel units or small area units. The threshold can thus be determined dynamically in consideration of the pattern of the image, enabling the sorting of pixels or small areas to be optimally implemented in filter design. Accordingly, coding performance can be improved by enhancing the image quality obtained through filtering.

(19) The present invention proposes a video decoding method of a video decoding device (e.g., equivalent to video decoding device BB in Fig. 3) that includes pixel value feature amount calculation means, threshold processing and sorting means and dynamic threshold determination means and that allows adaptive filtering within a decoding loop and allows filter design in units of a pixel or in units of a small area that is constituted by a plurality of pixels, the method including a first step of the pixel value feature amount calculation means deriving a feature amount (e.g., equivalent to below-mentioned pixel value gradient) of pixel values of a decoded image (e.g., equivalent to pre-filtering decoded image F in Fig. 3) in the pixel units or the small area units, a second step of the threshold processing and sorting means comparing the feature amounts derived by the pixel value feature amount calculation means with a threshold, and sorting the respective pixels or the respective small areas based on a result of the comparison, and a third step of the dynamic threshold determination means determining the threshold based on the feature amounts derived by the pixel value feature amount calculation means.

According to this invention, the threshold that is used when sorting pixels or small areas is determined based on a feature amount derived in pixel units or small area units. The threshold can thus be determined dynamically in consideration of the pattern of the image, enabling the sorting of pixels or small areas to be optimally implemented in filter design. Accordingly, coding performance can be improved by enhancing the image quality obtained through filtering.

(20) The present invention proposes a program for causing a computer to execute a video coding method of a video coding device (e.g., equivalent to video coding device AA in Fig. 1) that includes pixel value feature amount calculation means (e.g., equivalent to pixel value gradient feature amount calculation unit 51 in Fig. 2), threshold processing and sorting means (e.g., equivalent to threshold processing and sorting unit 53 in Fig. 2) and dynamic threshold determination means (e.g., equivalent to dynamic threshold determination unit 52 in Fig. 2) and that allows adaptive filtering within a coding loop and allows filter design in units of a pixel or in units of a small area that is constituted by a plurality of pixels, the program causing the computer to execute a first step of the pixel value feature amount calculation means deriving a feature amount (e.g., equivalent to below-mentioned pixel value gradient) of pixel values of a decoded image (e.g., equivalent to pre-filtering local decoded image h in Fig. 1) in the pixel units or the small area units, a second step of the threshold processing and sorting means comparing the feature amounts derived by the pixel value feature amount calculation means with a threshold, and sorting the respective pixels or the respective small areas based on a result of the comparison, and a third step of the dynamic threshold determination means determining the threshold based on the feature amounts derived by the pixel value feature amount calculation means.

According to this invention, the threshold that is used when sorting pixels or small areas is determined based on a feature amount derived in pixel units or small area units. The threshold can thus be determined dynamically in consideration of the pattern of the image, enabling the sorting of pixels or small areas to be optimally implemented in filter design. Accordingly, coding performance can be improved by enhancing the image quality obtained through filtering.

(21) The present invention proposes a program for causing a computer to execute a video decoding method of a video decoding device (e.g., equivalent to video decoding device BB in Fig. 3) that includes pixel value feature amount calculation means, threshold processing and sorting means and dynamic threshold determination means and that allows adaptive filtering within a decoding loop and allows filter design in units of a pixel or in units of a small area that is constituted by a plurality of pixels, the program causing the computer to execute a first step of the pixel value feature amount calculation means deriving a feature amount (e.g., equivalent to below-mentioned pixel value gradient) of pixel values of a decoded image (e.g., equivalent to pre-filtering decoded image F in Fig. 3) in the pixel units or the small area units, a second step of the threshold processing and sorting means comparing the feature amounts derived by the pixel value feature amount calculation means with a threshold, and sorting the respective pixels or the respective small areas based on a result of the comparison, and a third step of the dynamic threshold determination means determining the threshold based on the feature amounts derived by the pixel value feature amount calculation means.

According to this invention, the threshold that is used when sorting pixels or small areas is determined based on a feature amount derived in pixel units or small area units. The threshold can thus be determined dynamically in consideration of the pattern of the image, enabling the sorting of pixels or small areas to be optimally implemented in filter design. Accordingly, coding performance can be improved by enhancing the image quality obtained through filtering.

EFFECTS OF THE INVENTION

According to the present invention, coding performance can be improved by enhancing the image quality obtained through filtering.

BRIEF DESCRIPTION OF DRAWINGS

Fig. 1 is a block diagram of a video coding device according to one embodiment of the present invention.
Fig. 2 is a block diagram of a preliminary analysis unit that is included in the video coding device according to the embodiment.
Fig. 3 is a block diagram of a video decoding device according to one embodiment of the present invention.

MODE FOR CARRYING OUT THE INVENTION

Hereinafter, embodiments of the present invention will be described, with reference to the drawings. Note that constituent elements in the following embodiments can be replaced with existing constituent elements or the like as appropriate, and that various variations including combinations with other existing constituent elements are possible. Accordingly, the contents of the invention described in the claims are not limited by the description of the following embodiments.

Configuration and Operations of Video Coding Device AA

Fig. 1 is a block diagram of a video coding device AA according to one embodiment of the present invention. The video coding device AA allows adaptive filtering within a coding loop, and allows filter design in units of a pixel or in units of a small area that is constituted by a plurality of pixels. This video coding device AA is provided with a prediction value generation unit 1, a DCT/quantization unit 2, an entropy coding unit 3, an inverse DCT/inverse quantization unit 4, a preliminary analysis unit 5, a filter coefficient calculation unit 6, an adaptive filtering unit 7, and a local memory 8.

The prediction value generation unit 1 receives input of an original image a serving as an input image, and a below-mentioned filtered local decoded image d that is output from the local memory 8. This prediction value generation unit 1 generates a prediction value using a prediction method such as intra prediction or inter prediction. The prediction value generated using a prediction method with which the highest coding performance is expected is then output as a prediction value e.

The DCT/quantization unit 2 receives input of a prediction residual signal which is the difference between the original image a and the prediction value e. This DCT/quantization unit 2 orthogonally transforms the prediction residual signal, quantizes the transform coefficient obtained as a result, and outputs the quantization result as a quantized transform coefficient f.

The entropy coding unit 3 receives input of the quantized transform coefficient f. This entropy coding unit 3 entropy codes the quantized transform coefficient f, describes the result in coded data in accordance with descriptive rules (coding syntax) for describing coded data, and outputs the result as coded data b.

The inverse DCT/inverse quantization unit 4 receives input of the quantized transform coefficient f. This inverse DCT/inverse quantization unit 4 inverse quantizes the quantized transform coefficient f, inverse transforms the transform coefficient obtained as a result, and outputs the result as an inverse orthogonally transformed pixel signal g.

The preliminary analysis unit 5 receives input of a pre-filtering local decoded image h. The pre-filtering local decoded image h is the sum of the prediction value e and the inverse orthogonally transformed pixel signal g. This preliminary analysis unit 5 sorts pixels or small areas constituting the pre-filtering local decoded image h, and outputs the result as a sorting result i. The preliminary analysis unit 5 will be described in detail later using Fig. 2.

The filter coefficient calculation unit 6 receives input of the original image a, the pre-filtering local decoded image h, and the sorting result i. This filter coefficient calculation unit 6 calculates, for every pixel or small area that is sorted in accordance with the sorting result i, a filter coefficient that minimizes the error between the original image a and the pre-filtering local decoded image h as an optimal filter coefficient. The calculated filter coefficient is then output as coded data (filter coefficient) c.

The adaptive filtering unit 7 receives input of the coded data (filter coefficient) c, the pre-filtering local decoded image h, and the sorting result i. This adaptive filtering unit 7 performs, for every pixel or small area that is sorted in accordance with the sorting result i, filtering on the pixels of the pre-filtering local decoded image h using the filter coefficient calculated by the filter coefficient calculation unit 6. Also, the adaptive filtering unit 7 derives, for every filter control unit block, information showing the applied filter coefficient as propriety information. The filtering result and the propriety information are then output as the filtered local decoded image d.

The local memory 8 receives input of the filtered local decoded image d that is output from the adaptive filtering unit 7. This local memory 8 stores the input filtered local decoded image d, and outputs the stored image to the prediction value generation unit 1 as appropriate.

Configuration and Operations of Preliminary Analysis Unit 5

Fig. 2 is a block diagram of the preliminary analysis unit 5. The preliminary analysis unit 5 is provided with a pixel value gradient feature amount calculation unit 51, a dynamic threshold determination unit 52, and a threshold processing and sorting unit 53.

The pixel value gradient feature amount calculation unit 51 receives input of the pre-filtering local decoded image h. This pixel value gradient feature amount calculation unit 51 calculates, for every pixel or small area constituting the pre-filtering local decoded image h, a pixel value gradient, and outputs the result as a feature amount j for every pixel or small area.

Note that it is assumed that whether the pixel value gradient is calculated for every pixel or is calculated for every small area is determined in advance. Also, in the case of calculating the pixel value gradient for every small area, it is assumed that which pixels constitute each of these small areas is determined in advance. Also, it is assumed that this predetermined information is held not only in the preliminary analysis unit 5 but also in a preliminary analysis unit 140 which will be discussed later using Fig. 3.

Also, to give an example of calculating a pixel value gradient for every small area, in the case where a pixel value gradient is calculated for every small area of N pixels × N pixels, first, the pixel value gradient of each of the N × N pixels included in this small area is derived. Next, the average value of the pixel value gradients of these pixels is calculated and taken as the pixel value gradient of this small area.

Also, a technique using a Sobel filter or a Laplacian filter, for example, can be applied to calculating the pixel value gradient.

The dynamic threshold determination unit 52 receives input of the feature amount j for every pixel or small area. This dynamic threshold determination unit 52 determines a threshold based on the feature amount j for every pixel or small area, and outputs the result as a dynamic threshold m. Specifically, first, the feature amount j for every pixel or small area is quantized with a step width Q, and a histogram is derived in relation to the values of the quantized feature amounts. Next, bins in which frequencies are concentrated are detected from among the bins of the derived histogram. Next, the frequencies of two bins that are adjacent to each other among the detected bins are derived, and a value between the two derived frequencies is determined as the threshold for these two bins. Thresholds are thereby dynamically determined so as to enable bins in which frequencies are concentrated to be sorted.

The case where, for example, K types of bins is obtained as a result of quantizing the feature amount j for every pixel or small area with the step width Q will now be described. In this case, when the kth (k is an arbitrary integer satisfying $0 \leq k \leq K-1$) frequency of the histogram is represented by h(k), the dynamic threshold determination unit 52 evaluates changes in the frequencies of consecutive bins of the histogram.

Specifically, a first-order differentiation evaluation value $D_1(k)$ of frequency change shown in the following equation (1) is derived, where h(K) = h(K-1) is defined for convenience.

Equation 1

$$D_1(k) = h(k+1) - h(k) \quad (0 \leq k \leq K-1) \quad \cdot \cdot \cdot (1)$$

Next, second-order differentiation evaluation value $D_2(k)$ of frequency change shown in the following equation (2) is derived, where h(-1) = h(0) and h(K) = h(K-1) are defined for convenience.

Equation 2

$$D_2(k) = -h(k-1) + 2 \times h(k) - h(k+1) \quad (0 \leq k \leq K-1) \quad \cdot \cdot \cdot (2)$$

Next, k that satisfies the following equation (3) is derived, and the frequency h(k) of the derived k is detected as the above-mentioned frequency (characteristic frequency) of bins in which frequencies are concentrated. Note that in equation (3), T1 and T2 are respectively predetermined values.

Equation 3

$$D_1(k) > T1 \quad \text{and} \quad D_2(k) > T2 \quad \cdot \cdot \cdot (3)$$

Next, assuming that S number of the above-mentioned characteristic frequencies are detected, when these S characteristic frequencies are represented in ascending order as f(s) (s is an arbitrary integer satisfying $0 \leq s \leq S-1$), the threshold for f(s) and f(s+1) is determined from values between f(s) and f(s+1). (S-1) thresholds will thereby be determined.

The following two methods, for example, can be applied as a method of determining the above-mentioned threshold from the values between f(s) and f(s+1). Here, bins of the histogram corresponding to the frequency f(s) are represented as k1, and bins of the histogram corresponding to the frequency f(s+1) are represented as k2.

In the first method, the dynamic threshold determination unit 52 determines the average value of the frequency of k1 and the frequency of k2 as the threshold for k1 and k2.

In the second method, the dynamic threshold determination unit 52 respectively weights the frequency of k1 and the frequency of k2 with the following equations (4) and (5), and determines the sum of the results as the threshold for k1 and k2.

Equation 4

$$\frac{f(s)}{f(s)+f(s+1)} \quad \cdot \cdot \cdot (4)$$

Equation 5

$$\frac{f(s+1)}{f(s)+f(s+1)} \quad \cdot \cdot \cdot (5)$$

The threshold processing and sorting unit 53 receives input of the feature amount j and the dynamic threshold m for every pixel or small area. This threshold processing and sorting unit 53 performs threshold determination processing based on the dynamic threshold m for the feature amount j for every pixel or small area, and compares the feature amount j and the dynamic threshold m for every pixel or small area. These pixels or small areas are then sorted based on the comparison results, and the result of the sorting is output as the sorting result i. Pixels or small areas are thereby sorted into S sets by the (S-1) thresholds.

Configuration and Operations of Video Decoding Device BB

Fig. 3 is a block diagram of a video decoding device BB according to one embodiment of the present invention. The video decoding device BB allows adaptive filtering within a decoding loop, and allows filter application in units of a pixel or in units of a small area that is constituted by a plurality of pixels. This video decoding device BB is provided with an entropy decoding unit 110, a prediction value generation unit 120, an inverse DCT/inverse quantization unit 130, a preliminary analysis unit 140, a filtering unit 150, and a memory 160.

The entropy decoding unit 110 receives input of the coded data b. This entropy decoding unit 110 analyzes the contents described in the coded data b in accordance with the coded data structure, performs entropy decoding thereon, and outputs prediction information B and a residual signal C that are obtained as a result of the entropy decoding.

The prediction value generation unit 120 receives input of the prediction information B and a below-mentioned decoded image A that is output from the memory 160. This prediction value generation unit 120 determines a prediction method based on the prediction information B, and generates a prediction value D from the decoded image A in accordance with the determined prediction method, and outputs the generated prediction value D.

The inverse DCT/inverse quantization unit 130 receives input of the residual signal C. This inverse DCT/inverse quantization unit 130 inverse quantizes the residual signal C, inverse transforms the result thereof, and outputs the result as an inverse orthogonal transformation result E.

The preliminary analysis unit 140 receives input of a pre-filtering decoded image F. The pre-filtering decoded image F is the sum of the prediction value D and the inverse orthogonal transformation result E. This preliminary analysis unit 140, which is provided with a similar configuration to the preliminary analysis unit 5 and performs similar operations to the preliminary analysis unit 5, sorts pixels or small areas constituting the pre-filtering decoded image F and output the result as a sorting result G.

The filtering unit 150 receives input of the pre-filtering decoded image F, the coded data (filter coefficient) c, and the sorting result G. This filtering unit 150 performs, for every pixel or small area that is sorted in accordance with the sorting result G, filtering on the pixels of the pre-filtering decoded image F using the coded data (filter coefficient) c. The decoded image A obtained by the filtering is then output.

The memory 160 receives input of the decoded image A. This memory 160 stores the input decoded image A, and outputs the stored image to the prediction value generation unit 120 as appropriate.

According to the above video coding device AA and video decoding device BB, the following effects can be achieved.

The video coding device AA and the video decoding device BB each determine the threshold that is used when sorting pixels or small areas, based on the pixel value gradient for every pixel or small area. The threshold can thus be determined dynamically in consideration of the pattern of the image, enabling the sorting of pixels or small areas to be optimally implemented in filter design. Accordingly, coding performance can be improved by enhancing the image quality obtained through filtering.

Also, the video coding device AA and the video decoding device BB each derive a histogram of the pixel value gradient for every pixel or small area, detect bins in which frequencies are concentrated from among the bins of the derived histogram, and determine a value between the frequencies of two bins that are adjacent to each other among the detected bins as the threshold for these two bins. The threshold can thus be determined using a histogram of the pixel value gradient for every pixel or small area.

Also, the video coding device AA and the video decoding device BB each detect bins in which frequencies are concentrated, using first-order differentiation and second-order differentiation with respect to the frequencies of bins that are adjacent to each other, as described using the above-mentioned equations (1), (2), and (3). Changes in the frequencies of bins that are adjacent to each other can thus be detected by first-order differentiation and second-order differentiation with respect to the frequencies, enabling bins in which frequencies are concentrated to be appropriately detected.

Also, the video coding device AA and the video decoding device BB each determine the average value of the frequencies of two adjacent bins in which frequencies are concentrated or a weighted average value (see the above-mentioned equations (4) and (5)) of the frequencies of two adjacent bins in which frequencies are concentrated as the threshold for these two bins. The pixels or small areas respectively belonging to these two bins can thus be appropriately sorted using the threshold, enabling effects similar to the above-mentioned effects to be achieved.

Also, the video coding device AA and the video decoding device BB are each able to calculate the pixel value gradient for every pixel or small area using a Sobel filter or a Laplacian filter.

Also, the video coding device AA and the video decoding device BB each determine the threshold dynamically, and sort the pixels or the small areas using the determined threshold. Since the threshold dynamically determined by the video coding device AA or the result of sorting pixels or small areas in the video coding device AA does not thus need to be transmitted to the video decoding device BB, coding performance can be further improved as compared with the case where the threshold and the sorting result are transmitted to the video decoding device BB from the video coding device AA.

Note that the present invention can be realized by recording the processing of the video coding device AA or the video decoding device BB of the present invention on a non-transitory computer-readable recording medium, and causing the video coding device AA or the video decoding device BB to read and execute the program recorded on this recording medium.

Here, a nonvolatile memory such as an EPROM or a flash memory, a magnetic disk such as a hard disk, a CD-ROM, or the like, for example, can be applied as the above-mentioned recording medium. Also, reading and execution of the program recorded on this recording medium can be performed by a processor provided in the video coding device AA or the video decoding device BB.

Also, the above-mentioned program may be transmitted from the video coding device AA or the video decoding device BB that stores the program in storage device or the like to another computer system via a transmission medium or through transmission waves in a transmission medium. Here, the "transmission medium" that transmits the program is a medium having a function of transmitting information such as a network (communication network) like the Internet or a communication channel (communication line) like a telephone line.

Also, the above-mentioned program may be a program for realizing some of above-mentioned functions. Furthermore, the above-mentioned program may be a program that can realize the above-mentioned functions in combination with a program already recorded on the video coding device AA or the video decoding device BB, that is, a so-called patch file (difference program).

Although embodiments of this invention have been described in detail above with reference to the drawings, the specific configuration is not limited to these embodiments, and designs or the like that do not depart from the gist of the invention are intended to be within the scope of the invention.

For example, although, in the above-mentioned embodiments, the pixel value gradient for every pixel or small area was used as a feature amount for every pixel or small area, the invention is not limited thereto, and a dispersion value of pixel values for every pixel or small area may be used, for example.

Also, in the above-mentioned embodiments, the dynamic threshold determination unit 52 derives k that satisfies equation (3) and detects a frequency h(k) of the derived k as the above-mentioned characteristic frequency. However, the invention is not limited thereto, and a peak of the histogram may be detected, enabling the frequency of the detected peak to be detected as the characteristic frequency, with it being possible to detect the peak of the histogram using any of the following four methods.

In the first method, the dynamic threshold determination unit 52 derives k when the first-order differentiation evaluation value $D_1(k)$ of equation (1) is zero at the point at which the sign of the first-order differentiation evaluation value $D_1(k)$ changes from positive to negative, and detects the derived kth bin as a peak. The top of a protruding portion of the histogram can thereby be determined as a peak.

In the second method, the dynamic threshold determination unit 52 derives the second-order differentiation evaluation value $D_2(k)$ of equation (2) that is greater than a predetermined value, and detects the kth bin at this time as a peak. A bin whose frequency has a higher tendency to increase than the predetermined value can thereby be determined as a peak.

In the third method, the dynamic threshold determination unit 52 detects a bin having a higher frequency h(k) than a predetermined value as a peak or a range including a peak.

In the fourth method, the dynamic threshold determination unit 52 detects the valleys of the histogram by any of the above-mentioned first, second or third methods, and detects the bin between adjacent valleys as a peak. In the case of detecting the valleys of the histogram by the first method, k when the first-order differentiation evaluation value

$D_1(k)$ is zero at the point the sign of first-order differentiation evaluation value $D_1(k)$ of equation (1) changes from negative to positive is derived, and the derived kth bin is detected as a valley. Also, in the case of detecting the valleys of the histogram by the second method, the second-order differentiation evaluation value $D_2(k)$ of equation (2) that is smaller than a predetermined value is derived, and the kth bin at this time is detected as a valley. Also, in the case of detecting the valleys of the histogram by the third method, a bin having a lower frequency $h(k)$ than a predetermined value is detected as a valley or a range including a valley.

Also, although, according to the above-mentioned embodiments, the video coding device AA and the video decoding device BB each determine a threshold dynamically and sort pixels or small areas using the determined threshold, the present invention is not limited thereto, and the threshold dynamically determined by the video coding device AA or the result of sorting the pixels or small areas by the video coding device AA may be transmitted from the video coding device AA to the video decoding device BB. Since the video decoding device BB does not thereby need to determine a threshold and/or sort pixels or small areas, the computational load on the video decoding device BB can be reduced.

DESCRIPTION OF THE REFERENCE NUMERALS

| | |
|---|---|
| 5, 140 | Preliminary analysis unit |
| 6 | Filter coefficient calculation unit |
| 7 | Adaptation filtering unit |
| 150 | Filtering unit |
| 51 | Pixel value gradient feature amount calculation unit |
| 52 | Dynamic threshold determination unit |
| 53 | Threshold processing and sorting unit |
| AA | Video coding device |
| BB | Video decoding device |

**Claims**

1. A video coding device (AA) that allows adaptive filtering within a coding loop and which is configured to apply a filter to each of a plurality of areas, each area including one or more pixels, the video coding device (AA) comprising:

   pixel value feature amount calculation means (51) for deriving a feature amount of each area of a plurality of areas in a decoded image, the feature amount of an area being an average value of pixel value gradients of the area;
   dynamic threshold determination means (52) for determining, for each area, a respective threshold based on the feature amount of each area derived by the pixel value feature amount calculation means (51);
   threshold processing and sorting means (53) for comparing the feature amount of each area derived by the pixel value feature amount calculation means (51) with the respective threshold determined by the dynamic threshold determination means (52), and sorting each area based on the comparison results; and
   filtering means (7) for applying a filter to each area in dependence on the sorting result of the respective area by the threshold processing and sorting means (53), the filter being adapted for each area based on the respective comparison result;
   wherein the dynamic threshold determination means (52) includes:

   characteristic bin detection means for deriving a histogram of the feature amounts of the plurality of areas derived by the pixel value feature amount calculation means (51), and detecting bins in which frequencies are concentrated from among the bins of the derived histogram; and
   threshold determination means for deriving two bins that are adjacent to each other among the bins detected by the characteristic bin detection means, and determining a value between the two derived bins as the threshold for the two bins.

2. The video coding device according to claim 1, wherein the characteristic bin detection means is configured to detect bins in which the frequencies are concentrated, using first-order differentiation and second-order differentiation with respect to the frequencies of bins that are adjacent to each other among the bins of the histogram.

3. The video coding device according to claim 1 or 2, wherein the characteristic bin detection means is configured to determine an average value of the two bins that are adjacent to each other among the bins detected by the characteristic bin detection means or a weighted average value of the two bins that are adjacent to each other among the bins detected by the characteristic bin detection means as the threshold for the two bins.

4. The video coding device according to any preceding claim, wherein the pixel value feature amount calculation means (51) is configured to derive the pixel value gradients using a Sobel filter or a Laplacian filter.

5. A video decoding device (BB) that allows adaptive filtering within a decoding loop and which is configured to apply a filter to each of a plurality of areas, each area including one or more pixels, the video decoding device (BB) comprising:

   pixel value feature amount calculation means (51) for deriving a feature amount of each area of a plurality of areas in a decoded image, the feature amount of an area being an average value of pixel value gradients of the area;
   dynamic threshold determination means (52) for determining, for each area, a respective threshold based on the feature amount of each area derived by the pixel value feature amount calculation means (51);
   threshold processing and sorting means (53) for comparing the feature amount of each area derived by the pixel value feature amount calculation means (51) with the respective threshold determined by the dynamic threshold determination means (52), and sorting each area based on the comparison results; and
   filtering means (150) for applying a filter to each area in dependence on the sorting result of the respective area by the threshold processing and sorting means (53), the filter being adapted for each area based on the respective comparison result;
   wherein the dynamic threshold determination means (52) includes:

   characteristic bin detection means for deriving a histogram of the feature amounts of the plurality of areas derived by the pixel value feature amount calculation means (51), and detecting bins in which frequencies are concentrated from among the bins of the derived histogram; and
   threshold determination means for deriving two bins that are adjacent to each other among the bins detected by the characteristic bin detection means, and determining a value between the two derived bins as the threshold for the two bins.

6. The video decoding device according to claim 5, wherein the characteristic bin detection means is configured to detect bins in which the frequencies are concentrated, using first-order differentiation and second-order differentiation with respect to the frequencies of bins that are adjacent to each other among the bins of the histogram.

7. The video decoding device according to claim 5 or 6, wherein the characteristic bin detection means is configured to determine an average value of the two bins that are adjacent to each other among the bins detected by the characteristic bin detection means or a weighted average value of the two bins that are adjacent to each other among the bins detected by the characteristic bin detection means as the threshold for the two bins.

8. The video decoding device according to any of claims 5 to 7, wherein the pixel value feature amount calculation means (52) is configured to derive the pixel value gradients using a Sobel filter or a Laplacian filter.

9. A video system comprising a video coding device (AA) that allows adaptive filtering within a coding loop and which is configured to apply a filter to each of a plurality of areas, each area including one or more pixels, and a video decoding device (BB) that allows adaptive filtering within a decoding loop and which is configured to apply a filter to each of a plurality of areas, each area including one or more pixels,
wherein the video coding device (AA) includes:

   coding-side pixel value feature amount calculation means (51) for deriving a feature amount of each area of a plurality of areas in a decoded image, the feature amount of an area being an average value of pixel value gradients of the area;
   coding-side dynamic threshold determination means (52) for determining, for each area, a respective threshold based on the feature amount of each area derived by the coding-side pixel value feature amount calculation means (51);
   coding-side threshold processing and sorting means (53) for comparing the feature amount of each area derived by the coding-side pixel value feature amount calculation means (51) with the respective threshold determined by the coding-side dynamic threshold determination means (52), and sorting each area based on the comparison results; and

coding-side filtering means (7) for applying a filter to each area in dependence on the sorting result of the respective area by the coding-side threshold processing and sorting means (53), the filter being adapted for each area based on the respective comparison result; and

the video decoding device (BB) includes:

decoding-side pixel value feature amount calculation means (51) for deriving a feature amount of each area of a plurality of areas in a decoded image, the feature amount of an area being an average value of pixel value gradients of the area;

decoding-side dynamic threshold determination means (52) for determining, for each area, a respective threshold based on the feature amount of each area derived by the decoding-side pixel value feature amount calculation means (51);

decoding-side threshold processing and sorting means (53) for comparing the feature amount of each area derived by the decoding-side pixel value feature amount calculation means (51) with the respective threshold determined by the decoding-side dynamic threshold determination means (52), and sorting each area based on the comparison results; and

decoding-side filtering means (150) for applying a filter to each area in dependence on the sorting result of the respective area by the decoding-side threshold processing and sorting means (53), the filter being adapted for each area based on the respective comparison result;

wherein the coding-side dynamic threshold determination means (52) includes:

coding-side characteristic bin detection means for deriving a histogram of the feature amounts of the plurality of areas derived by the pixel value feature amount calculation means (51), and detecting bins in which frequencies are concentrated from among the bins of the derived histogram; and

coding-side threshold determination means for deriving two bins that are adjacent to each other among the bins detected by the characteristic bin detection means, and determining a value between the two derived bins as the threshold for the two bins.

10. A video system comprising a video coding device (AA) that allows adaptive filtering within a coding loop and which is configured to apply a filter to each of a plurality of areas, each area including one or more pixels, and a video decoding device (BB) that allows adaptive filtering within a decoding loop and which is configured to apply a filter to each of a plurality of areas, each area including one or more pixels,

wherein the video coding device (AA) includes:

coding-side pixel value feature amount calculation means (51) for deriving a feature amount of each area of a plurality of areas in a decoded image, the feature amount of an area being an average value of pixel value gradients of the area;

coding-side dynamic threshold determination means (52) for determining, for each area, a respective threshold based on the feature amount of each area derived by the coding-side pixel value feature amount calculation means (51);

coding-side threshold processing and sorting means (53) for comparing the feature amount of each area derived by the coding-side pixel value feature amount calculation means (51) with the respective threshold determined by the coding-side dynamic threshold determination means (52), and sorting each area based on the comparison results;

coding-side filtering means (7) for applying a filter to each area in dependence on the sorting result of the respective area by the coding-side threshold processing and sorting means (53), the filter being adapted for each area based on the respective comparison result; and

transmission means for transmitting the sorting result or the thresholds determined by the coding-side dynamic threshold determination means (52) to the video decoding device (BB), and

the video decoding device (BB) includes:

reception means for receiving the sorting result or the thresholds transmitted from the transmission means;

wherein the coding-side dynamic threshold determination means (52) includes:

coding-side characteristic bin detection means for deriving a histogram of the feature amounts of the plurality of areas derived by the pixel value feature amount calculation means (51), and detecting bins in which frequencies are concentrated from among the bins of the derived histogram; and

coding-side threshold determination means for deriving two bins that are adjacent to each other among the bins detected by the characteristic bin detection means, and determining a value between the two derived bins as the threshold for the two bins.

11. A video coding method of a video coding device (AA) that includes pixel value feature amount calculation means (51), dynamic threshold determination means (52), threshold processing and sorting means (53) and filtering means (7), and that allows adaptive filtering within a coding loop and applies a filter to each of a plurality of areas, each area including one or more pixels, the method comprising:

a first step of the pixel value feature amount calculation means (51) deriving a feature amount of each area of a plurality of areas in a decoded image, the feature amount of an area being an average value of pixel value gradients of the area;
a second step of the dynamic threshold determination means (52) determining, for each area, a respective threshold based on the feature amount of each area derived by the pixel value feature amount calculation means (51);
a third step of the threshold processing and sorting means (53) comparing the feature amount of each area derived by the pixel value feature amount calculation means (51) with the respective threshold determined by the dynamic threshold determination means (52), and sorting each area based on the comparison results; and
a fourth step of the filtering means (7) applying a filter to each area in dependence on the sorting result of the respective area by the threshold processing and sorting means (53), the filter being adapted for each area based on the respective comparison result;
wherein the second step includes:

a step of deriving a histogram of the feature amounts of the plurality of areas derived in the first step, and detecting bins in which frequencies are concentrated from among the bins of the derived histogram; and
a step of deriving two bins that are adjacent to each other among the bins detected, and determining a value between the two derived bins as the threshold for the two bins.

12. A video decoding method of a video decoding device (BB) that includes pixel value feature amount calculation means (51), dynamic threshold determination means (52), threshold processing and sorting means (53) and filtering means (150), and that allows adaptive filtering within a decoding loop and applies a filter to each of a plurality of areas, each area including one or more pixels, the method comprising:

a first step of the pixel value feature amount calculation means (51) deriving a feature amount of each area of a plurality of areas in a decoded image, the feature amount of an area being an average value of pixel value gradients of the area;
a second step of the dynamic threshold determination means (52) determining, for each area, a respective threshold based on the feature amount of each area derived by the pixel value feature amount calculation means (51);
a third step of the threshold processing and sorting means (53) comparing the feature amount of each area derived by the pixel value feature amount calculation means (51) with the respective threshold determined by the dynamic threshold determination means (52), and sorting each area based on the comparison results; and
a fourth step of the filtering means (150) applying a filter to each area in dependence on the sorting result of the respective area by the threshold processing and sorting means (53), the filter being adapted for each area based on the respective comparison result;
wherein the second step includes:

a step of deriving a histogram of the feature amounts of the plurality of areas derived in the first step, and detecting bins in which frequencies are concentrated from among the bins of the derived histogram; and
a step of deriving two bins that are adjacent to each other among the bins detected, and determining a value between the two derived bins as the threshold for the two bins.

13. A program for causing a computer to execute the video coding method of claim 11.

14. A program for causing a computer to execute the video decoding method of claim 12.

**Patentansprüche**

1. Videocodiergerät (AA), das adaptive Filterung in einer Codierschleife zulässt und zum Anwenden eines Filters auf jeden von mehreren Bereichen konfiguriert ist, wobei jeder Bereich ein oder mehrere Pixel beinhaltet, wobei das Videocodiergerät (AA) Folgendes umfasst:

   ein Pixelwert-Merkmalsbetrag-Berechnungsmittel (51) zum Ableiten eines Merkmalsbetrags jedes Bereichs von mehreren Bereichen in einem decodierten Bild, wobei der Merkmalsbetrag eines Bereichs ein Durchschnittswert von Pixelwertgradienten des Bereichs ist;

   ein dynamisches Schwellenbestimmungsmittel (52) zum Bestimmen, für jeden Bereich, einer jeweiligen Schwelle auf der Basis des durch das Pixelwert-Merkmalsbetrag-Berechnungsmittel (51) abgeleiteten Merkmalsbetrags jedes Bereichs;

   ein Schwellenverarbeitungs- und -sortiermittel (53) zum Vergleichen des von dem Pixelwert-Merkmalsbetrag-Berechnungsmittel (51) abgeleiteten Merkmalsbetrags jedes Bereichs mit der jeweiligen von dem dynamischen Schwellenbestimmungsmittel (52) bestimmten Schwelle, und Sortieren jedes Bereichs auf der Basis der Vergleichsergebnisse; und

   ein Filtermittel (7) zum Anwenden eines Filters auf jeden Bereich in Abhängigkeit vom Sortierergebnis des jeweiligen Bereichs durch das Schwellenverarbeitungs- und - sortiermittel (53), wobei das Filter für jeden Bereich auf der Basis des jeweiligen Vergleichsergebnisses adaptiert ist;

   wobei das dynamische Schwellenbestimmungsmittel (52) Folgendes beinhaltet:

   ein Charakteristischer-Bin-Erkennnungsmittel zum Ableiten eines Histogramms der vom Pixelwert-Merkmalsbetrag-Berechnungsmittel (51) abgeleiteten Merkmalsbeträge der mehreren Bereiche und Erkennen von Bins, in denen Frequenzen konzentriert sind, unter den Bins des abgeleiteten Histogramms; und

   ein Schwellenbestimmungsmittel zum Ableiten von zwei nebeneinander liegenden Bins unter den vom Charakteristischer-Bin-Erkennungsmittel erkannten Bins und zum Bestimmen eines Wertes zwischen den beiden abgeleiteten Bins als die Schwelle für die beiden Bins.

2. Videocodiergerät nach Anspruch 1, wobei das Charakteristischer-Bin-Erkennungsmittel zum Erkennen von Bins, in denen die Frequenzen konzentriert sind, mittels Differenzierung erster Ordnung und Differenzierung zweiter Ordnung mit Bezug auf die Frequenzen von nebeneinander liegenden Bins unter den Bins des Histogramms konfiguriert ist.

3. Videocodiergerät nach Anspruch 1 oder 2, wobei das Charakteristischer-Bin-Erkennungsmittel zum Bestimmen eines Durchschnittswerts der beiden nebeneinander liegenden Bins unter den vom Charakteristischer-Bin-Erkennungsmittel erkannten Bins oder eines gewichteten Durchschnittswerts der beiden nebeneinander liegenden Bins unter den vom Charakteristischer-Bin-Erkennungsmittel erkannten Bins als Schwelle für die beiden Bins konfiguriert ist.

4. Videocodiergerät nach einem vorherigen Anspruch, wobei das Pixelwert-Merkmalsbetrag-Berechnungsmittel (51) zum Ableiten der Pixelwertgradienten mit einem Sobel-Filter oder einem Laplace-Filter konfiguriert ist.

5. Videodecodiergerät (BB), das adaptive Filterung in einer Decodierschleife zulässt und zum Anwenden eines Filters auf jeden von mehreren Bereichen konfiguriert ist, wobei jeder Bereich ein oder mehrere Pixel beinhaltet, wobei das Videodecodiergerät (BB) Folgendes umfasst:

   ein Pixelwert-Merkmalsbetrag-Berechnungsmittel (51) zum Ableiten eines Merkmalsbetrags jedes Bereichs von mehreren Bereichen in einem decodierten Bild, wobei der Merkmalsbetrag eines Bereichs ein Durchschnittswert von Pixelwertgradienten des Bereichs ist;

   ein dynamisches Schwellenbestimmungsmittel (52) zum Bestimmen, für jeden Bereich, einer jeweiligen Schwelle auf der Basis des vom Pixelwert-Merkmalsbetrag-Berechnungsmittel (51) abgeleiteten Merkmalsbetrags jedes Bereichs;

   ein Schwellenverarbeitungs- und -sortiermittel (53) zum Vergleichen des vom Pixelwert-Merkmalsbetrag-Berechnungsmittel (51) abgeleiteten Merkmalsbetrags jedes Bereichs mit der vom dynamischen Schwellenbestimmungsmittel (52) ermittelten jeweiligen Schwelle und zum Sortieren jedes Bereichs auf der Basis der Vergleichsergebnisse; und

   Filtermittel (150) zum Anwenden eines Filters auf jeden Bereich in Abhängigkeit von dem Sortierergebnis des jeweiligen Bereichs durch das Schwellenverarbeitungs- und - sortiermittel (53), wobei das Filter für jeden Bereich auf der Basis des jeweiligen Vergleichsergebnisses adaptiert ist;
wobei das dynamische Schwellenbestimmungsmittel (52) Folgendes beinhaltet:

ein Charakteristischer-Bin-Erkennungsmittel zum Ableiten eines Histogramms der vom Pixelwert-Merkmalsbetrag-Berechnungsmittel (51) abgeleiteten Merkmalsbeträge der mehreren Bereiche und zum Erkennen von Bins, in denen Frequenzen konzentriert sind, unter den Bins des abgeleiteten Histogramms; und
ein Schwellenbestimmungsmittel zum Ableiten von zwei nebeneinander liegenden Bins unter den von dem Charakteristischer-Bin-Erkennungsmittel erkannten Bins und zum Bestimmen eines Wertes zwischen den beiden abgeleiteten Bins als die Schwelle für die beiden Bins.

6. Videodecodiergerät nach Anspruch 5, wobei das Charakteristischer-Bin-Erkennungsmittel zum Erkennen von Bins, in denen die Frequenzen konzentriert sind, mittels Differenzierung erster Ordnung und Differenzierung zweiter Ordnung mit Bezug auf die Frequenzen von nebeneinander liegenden Bins unter den Bins des Histogramms konfiguriert ist.

7. Videodecodiergerät nach Anspruch 5 oder 6, wobei das Charakteristischer-Bin-Erkennungsmittel zum Bestimmen eines Durchschnittswerts der beiden nebeneinander liegenden Bins unter den vom Charakteristischer-Bin-Erkennungsmittel erkannten Bins oder eines gewichteten Durchschnittswerts der beiden nebeneinander liegenden Bins unter den vom Charakteristischer-Bin-Erkennungsmittel erkannten Bins als die Schwelle für die beiden Bins konfiguriert ist.

8. Videodecodiergerät nach einem der Ansprüche 5 bis 7, wobei das Pixelwert-Merkmalsbetrag-Berechnungsmittel (52) zum Ableiten der Pixelwertgradienten mit einem Sobel-Filter oder einem Laplace-Filter konfiguriert ist.

9. Videosystem, das ein Videocodiergerät (AA) umfasst, das adaptive Filterung in einer Codierschleife zulässt und zum Anwenden eines Filters auf jeden von mehreren Bereichen konfiguriert ist, wobei jeder Bereich ein oder mehrere Pixel beinhaltet, und ein Videodecodiergerät (BB), das adaptive Filterung in einer Decodierschleife zulässt und zum Anwenden eines Filters auf jeden von mehreren Bereichen konfiguriert ist, wobei jeder Bereich ein oder mehrere Pixel beinhaltet,
wobei das Videocodiergerät (AA) Folgendes umfasst:

ein codierseitiges Pixelwert-Merkmalsbetrag-Berechnungsmittel (51) zum Ableiten eines Merkmalsbetrags jedes Bereichs von mehreren Bereichen in einem decodierten Bild, wobei der Merkmalsbetrag eines Bereichs ein Durchschnittswert von Pixelwertgradienten des Bereichs ist;
ein codierseitiges dynamisches Schwellenbestimmungsmittel (52) zum Bestimmen, für jeden Bereich, einer jeweiligen Schwelle auf der Basis des vom codierseitigen Pixelwert-Merkmalsbetrag-Berechnungsmittel (51) abgeleiteten Merkmalsbetrags jedes Bereichs;
ein codierseitiges Schwellenverarbeitungs- und - sortiermittel (53) zum Vergleichen des vom codierseitigen Pixelwert-Merkmalsbetrag-Berechnungsmittel (51) abgeleiteten Merkmalsbetrags jedes Bereichs mit der vom codierseitigen dynamischen Schwellenbestimmungsmittel (52) bestimmten jeweiligen Schwelle und zum Sortieren jedes Bereichs auf der Basis der Vergleichsergebnisse; und
ein codierseitiges Filtermittel (7) zum Anwenden eines Filters auf jeden Bereich in Abhängigkeit vom Sortierergebnis des jeweiligen Bereichs durch das codierseitige Schwellenverarbeitungs- und -sortiermittel (53), wobei das Filter für jeden Bereich auf der Basis des jeweiligen Vergleichsergebnisses adaptiert ist; und
wobei das Videodecodiergerät (BB) Folgendes umfasst:

ein decodierseitiges Pixelwert-Merkmalsbetrag-Berechnungsmittel (51) zum Ableiten eines Merkmalsbetrags jedes Bereichs von mehreren Bereichen in einem decodierten Bild, wobei der Merkmalsbetrag eines Bereichs ein Durchschnittswert von Pixelwertgradienten des Bereichs ist;
ein decodierseitiges dynamisches Schwellenbestimmungsmittel (52) zum Bestimmen, für jeden Bereich, einer jeweiligen Schwelle auf der Basis des vom decodierseitigen Pixelwert-Merkmalsbetrag-Berechnungsmittel (51) abgeleiteten Merkmalsbetrags jedes Bereichs;
ein decodierseitiges Schwellenverarbeitungs- und - sortiermittel (53) zum Vergleichen des vom decodierseitigen Pixelwert-Merkmalsbetrag-Berechnungsmittel (51) abgeleiteten Merkmalsbetrags jedes Bereichs mit der vom decodierseitigen dynamischen Schwellenbestimmungsmittel (52) bestimmten jeweiligen Schwelle und zum Sortieren jedes Bereichs auf der Basis der Vergleichsergebnisse; und
ein decodierseitiges Filtermittel (150) zum Anwenden eines Filters auf jeden Bereich in Abhängigkeit vom Sortierergebnis des jeweiligen Bereichs durch das decodierseitige Schwellenverarbeitungs- und -sortiermittel (53), wobei das Filter für jeden Bereich auf der Basis des jeweiligen Vergleichsergebnisses adaptiert ist;

wobei das codierseitige dynamische Schwellenbestimmungsmittel (52) Folgendes beinhaltet:

ein codierseitiges Charakteristischer-Bin-Erkennungsmittel zum Ableiten eines Histogramms der vom Pixelwert-Merkmalsbetrag-Berechnungsmittel (51) abgeleiteten Merkmalsbeträge der mehreren Bereiche und zum Erkennen von Bins, in denen Frequenzen konzentriert sind, unter den Bins des abgeleiteten Histogramms; und

ein codierseitiges Schwellenbestimmungsmittel zum Ableiten von zwei nebeneinander liegenden Bins unter den vom Charakteristischer-Bin-Erkennungsmittel erkannten Bins und zum Bestimmen eines Wertes zwischen den beiden abgeleiteten Bins als die Schwelle für die beiden Bins.

**10.** Videosystem, das ein Videocodiergerät (AA), das adaptive Filterung in einer Codierschleife zulässt und zum Anwenden eines Filters auf jeden von mehreren Bereichen konfiguriert ist, wobei jeder Bereich ein oder mehrere Pixel beinhaltet, und ein Videodecodiergerät (BB) umfasst, das adaptive Filterung in einer Decodierschleife zulässt und zum Anwenden eines Filters auf jeden von mehreren Bereichen konfiguriert ist, wobei jeder Bereich ein oder mehrere Pixel beinhaltet,

wobei das Videocodiergerät (AA) Folgendes umfasst:

ein codierseitiges Pixelwert-Merkmalsbetrag-Berechnungsmittel (51) zum Ableiten eines Merkmalsbetrags jedes Bereichs von mehreren Bereichen in einem decodierten Bild, wobei der Merkmalsbetrag eines Bereichs ein Durchschnittswert von Pixelwertgradienten des Bereichs ist;

ein codierseitiges dynamisches Schwellenbestimmungsmittel (52) zum Bestimmen, für jeden Bereich, einer jeweiligen Schwelle auf der Basis des vom codierseitigen Pixelwert-Merkmalsbetrag-Berechnungsmittel (51) abgeleiteten Merkmalsbetrags jedes Bereichs;

ein codierseitiges Schwellenverarbeitungs- und -sortiermittel (53) zum Vergleichen des vom codierseitigen Pixelwert-Merkmalsbetrag-Berechnungsmittel (51) abgeleiteten Merkmalsbetrags jedes Bereichs mit der jeweiligen vom codierseitigen dynamischen Schwellenbestimmungsmittel (52) bestimmten jeweiligen Schwelle und zum Sortieren jedes Bereichs auf der Basis der Vergleichsergebnisse;

ein codierseitiges Filtermittel (7) zum Anwenden eines Filters auf jeden Bereich in Abhängigkeit vom Sortierergebnis des jeweiligen Bereichs durch das codierseitige Schwellenverarbeitungs- und -sortiermittel (53), wobei das Filter für jeden Bereich auf der Basis des jeweiligen Vergleichsergebnisses adaptiert ist; und

Übertragungsmittel zum Übertragen des Sortierergebnisses oder der vom codierseitigen dynamischen Schwellenbestimmungsmittel (52) bestimmten Schwellen zu dem Videodecodiergerät (BB), und

wobei das Videodecodiergerät (BB) Folgendes umfasst:

ein Empfangsmittel zum Empfangen des Sortierergebnisses oder der von dem Übertragungsmittel übertragenen Schwellen;

wobei das codierseitige dynamische Schwellenbestimmungsmittel (52) Folgendes umfasst:

ein codierseitiges Charakteristischer-Bin-Erkennungsmittel zum Ableiten eines Histogramms der vom Pixelwert-Merkmalsbetrag-Berechnungsmittel (51) abgeleiteten Merkmalsbeträge der mehreren Bereiche und zum Erkennen von Bins, in denen Frequenzen konzentriert sind, unter den Bins des abgeleiteten Histogramms; und

ein codierseitiges Schwellenbestimmungsmittel zum Ableiten von zwei nebeneinander liegenden Bins unter den vom Charakteristischer-Bin-Erkennungsmittel erkannten Bins und zum Bestimmen eines Wertes zwischen den beiden abgeleiteten Bins als die Schwelle für die beiden Bins.

**11.** Videocodierverfahren eines Videocodiergeräts (AA), das ein Pixelwert-Merkmalsbetrag-Berechnungsmittel (51), ein dynamisches Schwellenbestimmungsmittel (52), ein Schwellenverarbeitungs- und -sortiermittel (53) und ein Filtermittel (7) umfasst und adaptive Filterung innerhalb einer Codierschleife zulässt und ein Filter auf jeden von mehreren Bereichen anwendet, wobei jeder Bereich ein oder mehrere Pixel beinhaltet, wobei das Verfahren Folgendes beinhaltet:

einen ersten Schritt, in dem das Pixelwert-Merkmalsbetrag-Berechnungsmittel (51) einen Merkmalsbetrag jedes Bereichs von mehreren Bereichen in einem decodierten Bild ableitet, wobei der Merkmalsbetrag eines Bereichs ein Durchschnittswert von Pixelwertgradienten des Bereichs ist;

einen zweiten Schritt, in dem das dynamische Schwellenbestimmungsmittel (52) für jeden Bereich eine jeweilige Schwelle auf der Basis des vom Pixelwert-Merkmalsbetrag-Berechnungsmittel (51) abgeleiteten Merkmalsbetrags jedes Bereichs bestimmt;

einen dritten Schritt, in dem das Schwellenverarbeitungs- und -sortiermittel (53) den vom Pixelwert-Merkmalsbetrag-Berechnungsmittel (51) abgeleiteten Merkmalsbetrag jedes Bereichs mit der vom dynamischen Schwellenbestimmungsmittel (52) bestimmten jeweiligen Schwelle vergleicht und jeden Bereich auf der Basis der Vergleichsergebnisse sortiert; und

einen vierten Schritt, in dem das Filtermittel (7) ein Filter auf jeden Bereich in Abhängigkeit vom Sortierergebnis des jeweiligen Bereichs durch das Schwellenverarbeitungs- und -sortiermittel (53) anwendet, wobei das Filter für jeden Bereich auf der Basis des jeweiligen Vergleichsergebnisses adaptiert ist;

wobei der zweite Schritt Folgendes beinhaltet:

einen Schritt des Ableitens eines Histogramms der Merkmalsbeträge der mehreren im ersten Schritt abgeleiteten Bereiche und des Erkennens von Bins, in denen Frequenzen konzentriert sind, unter den Bins des abgeleiteten Histogramms; und

einen Schritt des Ableitens von zwei nebeneinander liegenden Bins unter den erkannten Bins und des Bestimmens eines Wertes zwischen den beiden abgeleiteten Bins als die Schwelle für die beiden Bins.

12. Videodecodierverfahren eines Videodecodiergeräts (BB), das ein Pixelwert-Merkmalsbetrag-Berechnungsmittel (51), ein dynamisches Schwellenbestimmungsmittel (52), ein Schwellenverarbeitungs- und -sortiermittel (53) und ein Filtermittel (150) umfasst und adaptive Filterung innerhalb einer Decodierschleife zulässt und ein Filter auf jeden von mehreren Bereichen anwendet, wobei jeder Bereich ein oder mehrere Pixel beinhaltet, wobei das Verfahren Folgendes beinhaltet:

einen ersten Schritt, in dem das Pixelwert-Merkmalsbetrag-Berechnungsmittel (51) einen Merkmalsbetrag jedes Bereichs von mehreren Bereichen in einem decodierten Bild ableitet, wobei der Merkmalsbetrag eines Bereichs ein Durchschnittswert von Pixelwertgradienten des Bereichs ist;

einen zweiten Schritt, in dem das dynamische Schwellenbestimmungsmittel (52) für jeden Bereich eine jeweilige Schwelle auf der Basis des vom Pixelwert-Merkmalsbetrag-Berechnungsmittel (51) abgeleiteten Merkmalsbetrags jedes Bereichs bestimmt;

einen dritten Schritt, in dem das Schwellenverarbeitungs- und -sortiermittel (53) den vom Pixelwert-Merkmalsbetrag-Berechnungsmittel (51) abgeleiteten Merkmalsbetrag jedes Bereichs mit der vom dynamischen Schwellenbestimmungsmittel (52) bestimmten jeweiligen Schwelle vergleicht und jeden Bereich auf der Basis der Vergleichsergebnisse sortiert; und

einen vierten Schritt, in dem das Filtermittel (150) ein Filter auf jeden Bereich in Abhängigkeit vom Sortierergebnis des jeweiligen Bereichs durch das Schwellenverarbeitungs- und -sortiermittel (53) anwendet, wobei das Filter für jeden Bereich auf der Basis des jeweiligen Vergleichsergebnisses adaptiert ist;

wobei der zweite Schritt Folgendes beinhaltet:

einen Schritt des Ableitens eines Histogramms der im ersten Schritt abgeleiteten Merkmalsbeträge der mehreren Bereiche und des Erkennen von Bins, in denen Frequenzen konzentriert sind, unter den Bins des abgeleiteten Histogramms; und

einen Schritt des Ableitens von zwei nebeneinander liegenden Bins unter den erkannten Bins und des Bestimmens eines Wertes zwischen den beiden abgeleiteten Bins als die Schwelle für die beiden Bins.

13. Programm zum Bewirken, dass ein Computer das Videocodierverfahren nach Anspruch 11 durchführt.

14. Programm zum Bewirken, dass ein Computer das Videodecodierverfahren nach Anspruch 12 durchführt.

## Revendications

1. Dispositif de codage vidéo (AA) qui permet un filtrage adaptatif dans une boucle de codage et qui est configuré pour appliquer un filtre à chacune d'une pluralité de zones, chaque zone comportant un ou plusieurs pixels, le dispositif de codage vidéo (AA) comprenant :

un moyen de calcul de quantités caractéristiques de valeurs de pixels (51) pour dériver une quantité caractéristique de chaque zone d'une pluralité de zones dans une image décodée, la quantité caractéristique d'une zone étant une valeur moyenne de gradients de valeurs de pixels de la zone ;

un moyen de détermination de seuil dynamique (52) pour déterminer, pour chaque zone, un seuil respectif basé sur la quantité caractéristique de chaque zone dérivée par le moyen de calcul de quantités caractéristiques de valeurs de pixels (51) ;

un moyen de traitement de seuil et de tri (53) pour comparer la quantité caractéristique de chaque zone dérivée par le moyen de calcul de quantités caractéristiques de valeurs de pixels (51) au seuil respectif déterminé par le moyen de détermination de seuil dynamique (52), et trier chaque zone en fonction des résultats de comparaison ; et

un moyen de filtrage (7) pour appliquer un filtre à chaque zone en fonction du résultat de tri de la zone respective par le moyen de traitement de seuil et de tri (53), le filtre étant adapté pour chaque zone en fonction du résultat de comparaison respectif ;

dans lequel le moyen de détermination de seuil dynamique (52) comporte :

un moyen de détection de segments caractéristiques pour dériver un histogramme des quantités caractéristiques de la pluralité de zones dérivées par le moyen de calcul de quantités caractéristiques de valeurs de pixels (51), et détecter des segments dans lesquels des fréquences sont concentrées parmi les segments de l'histogramme dérivé ; et

un moyen de détermination de seuil pour dériver deux segments qui sont adjacents l'un à l'autre parmi les segments détectés par le moyen de détection de segments caractéristiques, et déterminer une valeur entre les deux segments dérivés en tant que seuil pour les deux segments.

2. Dispositif de codage vidéo selon la revendication 1, dans lequel le moyen de détection de segments caractéristiques est configuré pour détecter des segments dans lesquels les fréquences sont concentrées, par différenciation de premier ordre et différenciation de second ordre relativement aux fréquences de segments qui sont adjacents l'un à l'autre parmi les segments de l'histogramme.

3. Dispositif de codage vidéo selon la revendication 1 ou 2, dans lequel le moyen de détection de segments caractéristiques est configuré pour déterminer une valeur moyenne des deux segments qui sont adjacents d'un à l'autre parmi les segments détectés par le moyen de détection de segments caractéristiques ou une valeur moyenne pondérée des deux segments qui sont adjacents l'un à l'autre parmi les segments détectés par le moyen de détection de segments caractéristiques comme seuil pour les deux segments.

4. Dispositif de codage vidéo selon n'importe quelle revendication précédente, dans lequel le moyen de calcul de quantités caractéristiques de valeurs de pixels (51) est configuré pour dériver les gradients de valeurs de pixels à l'aide d'un filtre de Sobel ou d'un filtre de Laplace.

5. Dispositif de décodage vidéo (BB) qui permet un filtrage adaptatif dans une boucle de décodage et qui est configuré pour appliquer un filtre à chacune d'une pluralité de zones, chaque zone comportant un ou plusieurs pixels, le dispositif de décodage vidéo (BB) comprenant :

un moyen de calcul de quantités caractéristiques de valeurs de pixels (51) pour dériver une quantité caractéristique de chaque zone d'une pluralité de zones dans une image décodée, la quantité caractéristique d'une zone étant une valeur moyenne de gradients de valeurs de pixels de la zone ;

un moyen de détermination de seuil dynamique (52) pour déterminer, pour chaque zone, un seuil respectif en fonction de la quantité caractéristique de chaque zone dérivée par le moyen de calcul de quantités caractéristiques de valeurs de pixels (51) ;

un moyen de traitement de seuil et de tri (53) pour comparer la quantité caractéristique de chaque zone dérivée par le moyen de calcul de quantités caractéristiques de valeurs de pixels (51) au seuil respectif déterminé par le moyen de détermination de seuil dynamique (52), et trier chaque zone en fonction des résultats de comparaison ; et

un moyen de filtrage (150) pour appliquer un filtre à chaque zone en fonction du résultat de tri de la zone respective par le moyen de traitement de seuil et de tri (53), le filtre étant adapté pour chaque zone en fonction du résultat de comparaison respectif ;

dans lequel le moyen de détermination de seuil dynamique (52) comporte :

un moyen de détection de segments caractéristiques pour dériver un histogramme des quantités caractéristiques de la pluralité de zones dérivées par le moyen de calcul de quantités caractéristiques de valeurs de pixels (51), et détecter des segments dans lesquels des fréquences sont concentrées parmi les segments de l'histogramme dérivé ; et

un moyen de détermination de seuil pour dériver deux segments qui sont adjacents l'un à l'autre parmi les segments détectés par le moyen de détection de segments caractéristiques, et déterminer une valeur entre les deux segments dérivés en tant que seuil pour les deux segments.

6. Dispositif de décodage vidéo selon la revendication 5, dans lequel le moyen de détection de segments caractéristiques est configuré pour détecter des segments dans lesquels les fréquences sont concentrées, par différenciation de premier ordre et différenciation de second ordre relativement aux fréquences de segments qui sont adjacents d'un à l'autre parmi les segments de l'histogramme.

7. Dispositif de décodage vidéo selon la revendication 5 ou 6, dans lequel le moyen de détection de segments caractéristiques est configuré pour déterminer une valeur moyenne des deux segments qui sont adjacents l'un à l'autre parmi les segments détectés par le moyen de détection de segments caractéristiques ou une valeur moyenne pondérée des deux segments qui sont adjacents l'un à l'autre parmi les segments détectés par le moyen de détection de segments caractéristiques en tant que seuil pour les deux segments.

8. Dispositif de décodage vidéo selon l'une quelconque des revendications 5 à 7, dans lequel le moyen de calcul de quantités caractéristiques de valeurs de pixels (52) est configuré pour dériver les gradients de valeurs de pixels à l'aide d'un filtre de Sobel ou d'un filtre de Laplace.

9. Système vidéo comprenant un dispositif de codage vidéo (AA) qui permet un filtrage adaptatif dans une boucle de codage et qui est configuré pour appliquer un filtre à chacune d'une pluralité de zones, chaque zone comportant un ou plusieurs pixels, et un dispositif de décodage vidéo (BB) qui permet un filtrage adaptatif dans une boucle de décodage et qui est configuré pour appliquer un filtre à chacune d'une pluralité de zones, chaque zone comportant un ou plusieurs pixels,
dans lequel le dispositif de codage vidéo (AA) comporte :

un moyen de calcul de quantités caractéristiques de valeurs de pixels (51) côté codage pour dériver une quantité caractéristique de chaque zone d'une pluralité de zones dans une image décodée, la quantité caractéristique d'une zone étant une valeur moyenne de gradients de valeurs de pixels de la zone ;
un moyen de détermination de seuil dynamique (52) côté codage pour déterminer, pour chaque zone, un seuil respectif en fonction de la quantité caractéristique de chaque zone dérivée par le moyen de calcul de quantités caractéristiques de valeurs de pixels (51) côté codage ;
un moyen de traitement de seuil et de tri (53) côté codage pour comparer la quantité caractéristique de chaque zone dérivée par le moyen de calcul de quantités caractéristiques de valeurs de pixels (51) côté codage au seuil respectif déterminé par le moyen de détermination de seuil dynamique (52) côté codage, et trier chaque zone en fonction des résultats de comparaison ; et
un moyen de filtrage (7) côté codage pour appliquer un filtre à chaque zone en fonction du résultat de tri de la zone respective par le moyen de traitement de seuil et de tri (53) côté codage, le filtre étant adapté pour chaque zone en fonction du résultat de comparaison respectif ; et
le dispositif de décodage vidéo (BB) comporte :

un moyen de calcul de quantités caractéristiques de valeurs de pixels (51) côté décodage pour dériver une quantité caractéristique de chaque zone d'une pluralité de zones dans une image décodée, la quantité caractéristique d'une zone étant une valeur moyenne de gradients de valeurs de pixels de la zone ;
un moyen de détermination de seuil dynamique (52) côté décodage pour déterminer, pour chaque zone, un seuil respectif en fonction de la quantité caractéristique de chaque zone dérivée par le moyen de calcul de quantités caractéristiques de valeurs de pixels (51) côté décodage ;
un moyen de traitement de seuil et de tri (53) côté décodage pour comparer la quantité caractéristique de chaque zone dérivée par le moyen de calcul de quantités caractéristiques de valeurs de pixels (51) côté décodage au seuil respectif déterminé par le moyen de détermination de seuil dynamique (52) côté décodage, et trier chaque zone en fonction des résultats de comparaison ; et
un moyen de filtrage (150) côté décodage pour appliquer un filtre à chaque zone en fonction du résultat de tri de la zone respective par le moyen de traitement de seuil et de tri (53) côté décodage, le filtre étant adapté pour chaque zone en fonction du résultat de comparaison respectif ;
dans lequel le moyen de détermination de seuil dynamique (52) côté codage comporte :

un moyen de détection de segments caractéristiques côté codage pour dériver un histogramme des quantités caractéristiques de la pluralité de zones dérivées par le moyen de calcul de quantités caractéristiques de valeurs de pixels (51), et détecter des segments dans lesquels des fréquences sont concentrées parmi les segments de l'histogramme dérivé ; et

un moyen de détermination de seuil côté codage pour dériver deux segments qui sont adjacents l'un à l'autre parmi les segments détectés par le moyen de détection de segments caractéristiques, et déterminer une valeur entre les deux segments dérivés en tant que seuil pour les deux segments.

**10.** Système vidéo comprenant un dispositif de codage vidéo (AA) qui permet un filtrage adaptatif dans une boucle de codage et qui est configuré pour appliquer un filtre à chacune d'une pluralité de zones, chaque zone comportant un ou plusieurs pixels, et un dispositif de décodage vidéo (BB) qui permet un filtrage adaptatif dans une boucle de décodage et qui est configuré pour appliquer un filtre à chacune d'une pluralité de zones, chaque zone comportant un ou plusieurs pixels,

dans lequel le dispositif de codage vidéo (AA) comporte :

un moyen de calcul de quantités caractéristiques de valeurs de pixels (51) côté codage for dériver une quantité caractéristique de chaque zone d'une pluralité de zones dans une image décodée, la quantité caractéristique d'une zone étant une valeur moyenne de gradients de valeurs de pixels de la zone ;

un moyen de détermination de seuil dynamique (52) côté codage pour déterminer, pour chaque zone, un seuil respectif en fonction de la quantité caractéristique de chaque zone dérivée par le moyen de calcul de quantités caractéristiques de valeurs de pixels (51) côté codage ;

un moyen de traitement de seuil et de tri (53) côté codage pour comparer la quantité caractéristique de chaque zone dérivée par le moyen de calcul de quantités caractéristiques de valeurs de pixels (51) côté codage au seuil respectif déterminé par le moyen de détermination de seuil dynamique (52) côté codage, et trier chaque zone en fonction des résultats de comparaison ;

un moyen de filtrage (7) côté codage pour appliquer un filtre à chaque zone en fonction du résultat de tri de la zone respective par le moyen de traitement de seuil et de tri (53) côté codage, le filtre étant adapté pour chaque zone en fonction du résultat de comparaison respectif ; et

un moyen de transmission pour transmettre le résultat du tri ou les seuils déterminés par le moyen de détermination de seuil dynamique (52) côté codage au dispositif de décodage vidéo (BB), et

le dispositif de décodage vidéo (BB) comporte :

un moyen de réception pour recevoir le résultat du tri ou les seuls transmis par le moyen de transmission ;

dans lequel le moyen de détermination de seuil dynamique (52) côté codage comporte :

un moyen de détection de segments caractéristiques côté codage pour dériver un histogramme des quantités caractéristiques de la pluralité de zones dérivées par le moyen de calcul de quantités caractéristiques de valeurs de pixels (51), et détecter des segments dans lesquels des fréquences sont concentrées parmi les segments de l'histogramme dérivé ; et

un moyen de détermination de seuil côté codage pour dériver deux segments qui sont adjacents l'un à l'autre parmi les segments détectés par le moyen de détection de segments caractéristiques, et déterminer une valeur entre les deux segments dérivés en tant que seuil pour les deux segments.

**11.** Procédé de codage vidéo d'un dispositif de codage vidéo (AA) qui comporte un moyen de calcul de quantités caractéristiques de valeurs de pixels (51), un moyen de détermination de seuil dynamique (52), un moyen de traitement de seuil et de tri (53) et un moyen de filtrage (7), et qui permet un filtrage adaptatif dans une boucle de codage et applique un filtre à chacune d'une pluralité de zones, chaque zone comportant un ou plusieurs pixels, le procédé :

une première étape du moyen de calcul de quantités caractéristiques de valeurs de pixels (51) de dérivée d'une quantité caractéristique de chaque zone d'une pluralité de zones dans une image décodée, la quantité caractéristique d'une zone étant une valeur moyenne de gradients de valeurs de pixels de la zone ;

une deuxième étape du moyen de détermination de seuil dynamique (52) de détermination, pour chaque zone, d'un seuil respectif en fonction de la quantité caractéristique de chaque zone dérivée par le moyen de calcul de quantités caractéristiques de valeurs de pixels (51) ;

une troisième étape du moyen de traitement de seuil et de tri (53) de comparaison de la quantité caractéristique de chaque zone dérivée par le moyen de calcul de quantités caractéristiques de valeurs de pixels (51) au seuil respectif déterminé par le moyen de détermination de seuil dynamique (52), et de tri de chaque zone en fonction des résultats de comparaison ; et

une quatrième étape du moyen de filtrage (7) d'application d'un filtre à chaque zone en fonction du résultat de tri de la zone respective par le moyen de traitement de seuil et de tri (53), le filtre étant adapté pour chaque zone en fonction du résultat de comparaison respectif ;
dans lequel la deuxième étape comporte :

une étape de dérivée d'un histogramme des quantités caractéristiques de la pluralité de zones dérivées dans la première étape, et de détection des segments dans lesquels des fréquences sont concentrées parmi les segments de l'histogramme dérivé ; et
une étape de dérivée de deux segments qui sont adjacents l'un à l'autre parmi les segments détectés, et de détermination d'une valeur entre les deux segments dérivés en tant que seuil pour les deux segments.

12. Procédé de décodage vidéo d'un dispositif de décodage vidéo (BB) qui comporte un moyen de calcul de quantités caractéristiques de valeurs de pixels (51), un moyen de détermination de seuil dynamique (52), un moyen de traitement de seuil et de tri (53) et un moyen de filtrage (150), et qui permet un filtrage adaptatif dans une boucle de décodage et applique un filtre à chacune d'une pluralité de zones, chaque zone comportant un ou plusieurs pixels, le procédé comprenant :

une première étape du moyen de calcul de quantités caractéristiques de valeurs de pixels (51) de dérivée d'une quantité caractéristique de chaque zone d'une pluralité de zones dans une image décodée, la quantité caractéristique d'une zone étant une valeur moyenne de gradients de valeurs de pixels de la zone ;
une deuxième étape du moyen de détermination de seuil dynamique (52) de détermination, pour chaque zone, d'un seuil respectif en fonction de la quantité caractéristique de chaque zone dérivée par le moyen de calcul de quantités caractéristiques de valeurs de pixels (51) ;
une troisième étape du moyen de traitement de seuil et de tri (53) de comparaison de la quantité caractéristique de chaque zone dérivée par le moyen de calcul de quantités caractéristiques de valeurs de pixels (51) au seuil respectif déterminé par le moyen de détermination de seuil dynamique (52), et de tri de chaque zone en fonction des résultats de comparaison ; et
une quatrième étape du moyen de filtrage (150) d'application d'un filtre à chaque zone en fonction du résultat de tri de la zone respective par le moyen de traitement de seuil et de tri (53), le filtre étant adapté pour chaque zone en fonction du résultat de comparaison respectif ;
dans lequel la deuxième étape comporte :

une étape de dérivée d'un histogramme des quantités caractéristiques de la pluralité de zones dérivées dans la première étape, et de détection des segments dans lesquels des fréquences sont concentrées parmi les segments de l'histogramme dérivé ; et
une étape de dérivée de deux segments qui sont adjacents l'un à l'autre parmi les segments détectés, et de détermination d'une valeur entre les deux segments dérivés en tant que seuil pour les deux segments.

13. Programme pour amener un ordinateur à exécuter le procédé de codage vidéo selon la revendication 11.

14. Programme pour amener un ordinateur à exécuter le procédé de décodage vidéo selon la revendication 12.

FIG. 1

EP 3 007 443 B1

EP 3 007 443 B1

# FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Text of ISO/IEC 14496-10 Advanced Video Coding. *Joint Video Team (JVT) of ISO/IEC MPEG and ITU-T VCEG,* July 2004
- High Efficiency Video Coding (HEVC) text specification draft 10. *JCT-VC 12th meeting, JCTVC-L1003,* January 2013, vol. 34
- **T. CHUJOH ; G. YASUDA ; N. WADA ; T. YAMAGAKE.** Block-based adaptive loop filter. *ITU-T Q.6/SG16, VCEG-AI18,* 2008

- **M. KARCZEWICZ ; P. CHEN ; R. JOSHI ; X. WANG ; W. CHIEN ; R. PANCHAL.** Video coding technology proposal by Qualcomm Inc. *JCTVC-A121,* April 2010
- **T. YOSHINO ; S. NAITO.** Adaptive loop filter technology based on analytical design considering local image characteristics. *18th IEEE International Conference on Image Processing,* 2011, 3477-3480
- **P. LIST et al.** Adaptive deblocking filter. *IEEE Transactions on Circuits and Systems for Video Technology,* July 2003, vol. 13 (7